Europäisches Patentamt

European Patent Office

Office européen des brevets

(19)

(11) Veröffentlichungsnummer: **0 175 053**
**A2**

(12) # EUROPÄISCHE PATENTANMELDUNG

(21) Anmeldenummer: 85105530.1

(22) Anmeldetag: 07.05.85

(51) Int. Cl.⁴: **B 23 B 51/10**

(30) Priorität: 18.09.84 DE 3434254

(43) Veröffentlichungstag der Anmeldung: 26.03.86
Patentblatt 86/13

(84) Benannte Vertragsstaaten: **AT CH FR GB IT LI NL SE**

(71) Anmelder: **Hermann Bilz GmbH & Co,
Robert-Koch-Strasse 36, D-7300 Esslingen (DE)**

(72) Erfinder: **Höne, Wolfgang, Rosswälder Strasse 22,
D-7311 Hochdorf (DE)**

(74) Vertreter: **Kratzsch, Volkhard, Dipl.-Ing.,
Mülbergerstrasse 65, D-7300 Esslingen (DE)**

(54) **Kegelsenker.**

(57) Ein Kegelsenker hat z.B. drei in Umfangswinkelabstän- den in Sitzen auswechselbar gehaltene Schneidplatten (13, 14, 15) mit jeweils einer Schneidkante (16, 17, 18). Jeder Sitz ist durch eine von außen eingetiefte Nut (23, 24, 25) U-förmi- gen Querschnitts gebildet, die vom Zentrum längs einer Kegelmantellinie nach außen verläuft und zum Zentrum offen ist, am anderen Ende dagegen mittels Stützfläche (26) begrenzt ist. Jede Schneidplatte (13, 14, 15) ist eine im Querschnitt etwa rechteckige Leiste, die in der Nut (23, 24, 25) paßgenau aufgenommen und mit endseitiger Anschlag- fläche (27) an der Stützfläche (26) abgestützt ist. Im Zentrum ist in den Senkerkörper (10) eine Spannschraube (29) mit Kegelkopf (31) eingeschraubt, der auf eine zugewandte Spannfläche (34, 35, 36) jeder Schneidplatte (13, 14, 15) drückt, so daß die Spannschraube (29) beim Festziehen auf alle Schneidplatten (13, 14, 15) gemeinsam eine vom Zen- trum ausgehende Spannkraft ausübt, durch die die Schneid- platten (13, 14, 15) in ihrer jeweiligen Nut (23, 24, 25) fixiert sind. Die Nuten (23, 24, 25) und damit die Schneidplatten (13, 14, 15) verlaufen hinter einer die Werkzeugmitte enthalten- den Diametralebene (44), wodurch die Spannwirkung er- höht wird.

| Patentanwalt | Mülbergerstr. 65 | Zugelassener Vertreter beim |
| Dipl.-Ing. Volkhard Kratzsch | D-7300 Esslingen | Europäischen Patentamt |
| | | European Patent Attorney |

| | Telefon Stuttgart (0711) 317000 | Deutsche Bank Esslingen 210906 |
| | cable «krapatent» esslingenneckar | Postscheckamt Stuttgart 10004-701 |

Hermann Bilz GmbH & Co.

D-7300 Esslingen

24. April 1985

Anwaltsakte 3920

Kegelsenker

Die Erfindung bezieht sich auf einen Kegelsenker der im Oberbegriff des Anspruchs 1 definierten Art.

Bei bekannten Kegelsenkern dieser Art sind die einzelnen Schneidplatten jeweils mittels pro Schneidplatte vorgesehener Klemm- oder Spannmittel in ihren Sitzen auswechselbar gehalten. Diese Klemm- oder Spannmittel bestehen entweder aus je Schneidplatte vorgesehenen besonderen Spannpratzen mit festziehbarer Schraube oder aus je Schneidplatte vorgesehener Schraube, die eine paßgenaue Öffnung der Schneidplatte quer durchsetzt und in eine im Bereich des Sitzes vorgesehene Gewindebohrung des Senkerkörpers eingeschraubt wird. Die Schneidplatten sind hierbei z.B. dreieckig, rhombisch, etwa halbkreisförmig oder in anderer Weise ausgebildet. Entsprechend sind die einzelnen Anlageflächen des zugeordneten Sitzes im Senkerkörper beschaffen. Derartige Kegelsenker haben vielfältige Nachteile. Zum einen ist der Senkerkörper stark ausgefräst und in seinem Querschnitt relativ stark geschwächt, um den für die Schneidplatten und deren Sitze sowie für die jeweilige Klemm- und Spannvorrichtung erforderlichen Platz zu schaffen. In Arbeitsrichtung In Arbeitsrichtung vor der Schneidkante der Schneidplatte muß vor allem auch deswegen ausreichend Platz verbleiben, damit man z.B. etwa rechtwinklig zur Schneidplattenebene gerichtete Befestigungsschrauben befestigen und lösen kann. Die resultierende Schwächung des Senkerkörpers kann zu einer Reduzierung der Festigkeit führen. Vor allem lassen sich dadurch die Kegelsenker nicht beliebig im Durchmesser verkleinern, sondern nur bis hin zu einem Mindestdurchmesser, der nicht unterschritten werden kann. Daraus und aus der Form der Schneidplatten resultiert auch, daß man die Schneidplatten und deren Sitze nur so anordnen kann, daß der dem Zentrum des Senkerkörpers nahe Endbereich jeder Schneidkante noch einen ausreichend großen Abstand von der Werkzeugmitte hat; denn sonst müßte man für die Herstellung der Sitze bis zur Mitte oder gar über diese hinaus Material wegfräsen, um diesen Platz bereitzustellen, was schon aus Festigkeitsgründen nicht tragbar ist. Die erläuterte Form bekannter Schneidplatten sowie deren Sitze und Klemm- und Spannvorrichtungen bedingt zusätzlich zum Gewichts- und Kostenaufwand außerdem kostenaufwendige Zerspanungsarbeiten, da außerordentlich viel Material zerspanend abgearbeitet werden muß. Auch dies ist zeit- und kostenaufwendig und daher teuer. Nachteilig ist ferner, daß die einzelnen Anlageflächen für die Schneidplatten im Senkerkörper mit der erforderlichen hohen Genauigkeit hergestellt werden müssen. Diese Anlagenflächen sind bei den erläuterten Formen bekannter Schneidplatten relativ kompliziert. Die Herstellung des Plattensitzes ist daher nicht nur kostenaufwendig, sondern sie erfordert auch hohe Genauigkeit, was die Kosten noch erhöht. Zusätzlicher Aufwand und damit zusätzliche Kosten ergeben sich daraus, daß je Schneidplatte mehrere Anlage- und Sitzflächen erforderlich sind, die maßgenau aufeinander abgestimmt sein müssen. So ist z.B. bei dreieckigen Schneidplatten der Plattensitz im Senkerkörper als etwa dreieckförmige Eintiefung gestaltet, mit Rückenfläche sowie dazu quergerichteten, zueinander spitzwinklig ausgerichteten schmalen Seitenflächen für zwei Dreieckseiten. Außerdem ist die Rückenfläche von einer Gewindebohrung durchsetzt, die ebenfalls sehr genau, bezogen auf den Eckwinkel der zwei Dreieckseiten, plaziert und gefertigt sein muß, weil beim Festschrauben einer dreieckförmigen Schneidplatte mittels in die Gewindebohrung eingreifender Schraube dadurch im einen oder anderen Fall die Schneidplatte mit der Dreieckspitze in den spitzwinkligen Sitz hineingezogen werden soll. Ferner ist für den Fall des Wechsels der Schneidplatten ein großer Zeitaufwand nötig, zusätzlich zu zumindest gewisser Sachkenntnis und präzisem Vorgehen. Je Schneidplatte muß die Klemm- und Spannvorrichtung zunächst gelöst werden, damit man jede einzelne Schneidplatte entfernen kann. Nach Einsetzen jeder neuen Schneidplatte muß deren Klemm- und Spannvorrichtung wieder plaziert und angezogen werden. Zugleich muß man darauf achten, daß die neu eingesetzte Schneidplatte im Plattensitz genau aufgenommen wird. Etwaige Toleranzen bei den plattenseitigen Anlageflächen werden hier nicht aufgenommen. Wenn die Maßabweichungen stärker sind, sitzt die Schneidplatte nicht richtig im Plattensitz. Bei einem mehrschneidigen Kegelsenker gattungsgemäßer Art ergeben sich dann je Schneidplatte unterschiedliche Positionen, die beim Senkvorgang natürlich Nachteile mit sich bringen.

Der Erfindung liegt die Aufgabe zugrunde, einen Kegelsenker der im Oberbegriff des Anspruchs 1 definierten Gattung so auszubilden, daß die eingangs erläuterten Nachteile bekannter Kegelsenker damit beseitigt sind. Unter Sicherung einer guten, dauerhaften Fixierung der einzelnen Schneidplatten in ihren Sitzen soll eine Vereinfachung der Schneidplatten selbst einschließlich ihrer Anlageflächen für die Sitze und insbesondere der im Senkerkörper vorhandenen Sitze unter Gewährleistung zugleich hoher Genauigkeit mit gleichzeitiger Verringerung der Sitzflächen erzielt werden, wobei zugleich der Aufwand für Klemm- und Spannvorrichtungen für die Schneidplatten wesentlich verringert und der Aufwand für den Wechsel der Schneidplatten ebenfalls wesentlich verringert und der Wechsel wesentlich einfacher gestaltet werden.

Die Aufgabe ist bei einem Kegelsenker der im Oberbegriff des Anspruchs definierten Art erfindungsgemäß durch die Merkmale im Kennzeichnungsteil des Anspruchs 1 gelöst.

Der erfindungsgemäße Kegelsenker hat folgende Vorteile. Die Nuten als Sitze für die Schneidplatten sind in ihrer geometrischen Form einfach und daher schnell, kostengünstig und ohne größeren Zerspanungsaufwand herzustellen. Der Senkerkörper wird im Querschnitt dadurch nicht weiter geschwächt, selbst dann nicht, wenn diese Nuten möglichst nahe bis hin zum Zentrum, also in den Bereich der Kegelspitze, geführt werden. Sonstige Ausfräsungen sind beim Senkerkörper nicht nötig, so daß dessen Querschnitt im übrigen also erhalten bleibt. Es lassen sich Kegelsenker auch sehr kleinen Durchmessers bilden, wobei man also nicht an einen Mindestdurchmesser gebunden ist, der nicht unterschritten werden könnte. Auch die leistenförmigen Schneidplatten, in ihrer Form angepaßt an die Nuten, sind einfach und daher kostengünstig. Die einzelnen den Sitz gewährleistenden Flächen des Senkerkörpers einerseits und der Schneidplatten andererseits sind in ihrer Anzahl reduziert. Vor allem sind diese Flächen geometrisch wesentlich einfacher und daher auch einfacher, dabei genauer, und kostengünstiger herzustellen. Ferner ist beim Wechsel der Schneidplatten nicht besondere Sachkenntnis und Sorgfalt nötig, um den genauen Sitz zu sichern. Vielmehr ergibt sich dieser Sitz zwangsläufig durch die geometrisch einfachen, einander zugeordneten Anlageflächen des Senkerkörpers einerseits und der Schneidplatten andererseits.

0175053

Von besonderem Vorteil ist ferner, daß der Kegelsenker in Form der zentralen Spannschraube lediglich eine einzige Klemm- und Spannvorrichtung hat, die allen Schneidplatten gemeinsam ist und gleichzeitig auf alle Schneidplatten wirkt. Aufgrund des Gewindes, das bekanntlich nicht zentriert, ist die Spannschraube in der Lage, Toleranzen bei den Schneidplatten auszugleichen, insbesondere unterschiedliche Längen. Dennoch ist ein gleichmäßiger Andruck, von der zentralen Spannschraube ausgehend, für alle Schneidplatten gewährleistet. Allein die zentrale Spannschraube und geometrisch einfache, in ihrer Anzahl reduzierte Anlageflächen des Senkerkörpers einerseits und der Schneidplatten andererseits machen es möglich, daß die Schneidplatten allesamt bei festgezogener Spannschraube gleichmäßig und dauerhaft in ihrem jeweiligen Sitz fixiert sind, und dies durch Spannwirkung in allen dafür erforderlichen Richtungen. Der Wegfall einer je Schneidplatte eigenen Klemm- und Spannvorrichtung vereinfacht die Schneidplatte und deren Sitz und reduziert Gewicht und Kosten. Zugleich entfallen sonst nötige Ausfräsungen dafür. Es ist ersichtlich, daß Nuten als Sitze und Schneidplatten in Leistenform in dieser geometrisch einfachen Gestaltung wesentlich einfacher zu bearbeiten sind als andere zueinander winklig ausgerichtete Flächen sowie je Schneidplatte und Sitz nötige Bohrungen für deren Klemmung. Durch die allen Schneidplatten gemeinsame zentrale Spannschraube gestaltet sich der Wechsel der Schneidplatten problemlos. Die Spannschraube ist lediglich zu lösen, wobei sie je nach Gestaltung noch nicht einmal ganz herausgeschraubt werden muß, da ein Lösen soweit ausreicht, bis die Spannschraube im Zentrum die Schneidplatten freigibt. Dann lassen sich diese allesamt aus den Nuten herausziehen und gegen andere austauschen, die in die Nuten einzulegen sind. Hiernach reicht ein kurzes Festziehen der Spannschraube, um damit gleichzeitig sämtliche Schneidplatten in ihren Sitzen zu fixieren.

0175053

Die Schneidplatten sind, etwa in Richtung einer Kegelmantellinie gesehen, unter Druck zwischen der Spannschraube am einen Ende und der Stützfläche am anderen Ende fest verspannt, wobei die Schneidplatten zugleich in ihrer Nut gepreßt gehalten werden.

Vorteilhafte Ausführungsformen der Spannschraube ergeben sich aus den Ansprüchen 2 - 4. Dabei hat sich gezeigt, daß z.B. ein Kegelwinkel von 120° besonders günstig ist, weil dadurch die Schneidplatten zuverlässig in Richtung der jeweiligen Nut eingepreßt gehalten werden. Gleichwohl kann der Kegelwinkel auch größer oder kleiner, also zwischen 70° und 140°, sein oder als Radius ausgebildet sein.

Weitere vorteilhafte Ausführungsformen ergeben sich aus den Ansprüchen 5 und 6. Dabei kann es von Vorteil sein, die Winkelausrichtung der Stützfläche in bezug auf die Druckfläche des Spannschraubenkopfes abweichend vom zueinander parallelen Verlauf zu wählen, insbesondere so, daß die Druckfläche des Spannschraubenkopfes mit dem Nutgrund der Nut einen Winkel einschließt, der kleiner ist als derjenige, den die Stützfläche mit dem Nutgrund einschließt, z.B. einen Winkel von kleiner 90°. Dann hat die von der Spannschraube erzeugte Druckkraft auch eine Komponente in Richtung zum Nutgrund, durch die jede Schneidplatte, ausgehend vom Kegelmantel, in Richtung zum Nutgrund hin eingepreßt wird.

Eine weitere vorteilhafte Ausführungsform ergibt sich aus Anspruch 7 und ferner aus den Ansprüchen 8 - 11. Die Merkmale in Anspruch 8 haben den Vorteil, daß zum einen im Bereich der zur Spannschraube weisenden Enden aller Schneidplatten ausreichend Luft für die Drehbetätigung der Spannschraube vorhanden ist. Der von der Druckfläche der Spannschraube ausgehende, auf die Spannfläche der Schneidplatte wirkende Spanndruck hat dadurch eine zusätzliche Komponente in Richtung zum Nutgrund, über die jede Schneidplatte in den Nutgrund hineingepreßt wird.

Vorteilhaft sind ferner die Merkmale im Anspruch 12, wodurch die Nut besonders einfach und kostengünstig herstellbar ist, und ferner die Merkmale nach Anspruch 13. Die weniger hohe Bruststützfläche kann daher resultieren, daß der jeweiligen Schneidkante einer Schneidplatte in Arbeitsrichtung Spankammern vorgelagert sind. Die Spannung und Ausbildung der Schneidplatten und deren Sitze macht es möglich, diese Spankammern praktisch beliebig und nach Wahl so groß wie nötig auszubilden.

Weitere, vorteilhafte Ausführungsformen ergeben sich aus den Ansprüchen 14 - 16. Diese miteinander in Eingriff stehenden Schrägflächen bewirken eine besonders zuverlässige, dauerhafte Fixierung jeder Schneidplatte in ihrem Sitz. Hierbei liegen zum einen beide Schrägflächen und zum anderen die Rückenstützfläche und Rückenfläche unter Druck aneinander an. Dann kommt es auf eine Anlage zwischen der Bruststützfläche und Brustfläche, vor allem eine Anlage unter Druck, nicht an. Die Druckentfaltung ist möglich, da die Fußfläche der Schneidplatte mit Abstand von dem Nutgrund verläuft. Eine Anlage ebenfalls unter Druck ist ferner gegeben zwischen der Druckfläche des Spannschraubenkopfes und der Spannfläche des Schneidplatte und ferner, am anderen Ende, zwischen der Stützfläche und der endseitigen Anschlagfläche der Schneidplatte.

Weitere, vorteilhafte Maßnahmen enthalten die Ansprüche 17 - 20. Hierdurch wird die Anpreßkraft, mit der die Schneidplatte in der Nut gesichert ist, noch vergrößert; denn im quer zur Längsmittelachse des Senkerkörpers betrachteten Schnitt liegt die punktförmige Berührungsstelle zwischen der Druckfläche des Spannschraubenkopfes einerseits und der Spannfläche der Schneidplatte andererseits

0175053

in Abstand von der in Anspruch 7 genannten Diametralebene, etwa auf der Mitte zwischen der Diametralebene und der Sekantenebene. Die schräge Spannfläche verläuft hier längs einer Tangente in diesem Berührungspunkt an die Druckfläche des Spannschraubenkopfes. Dadurch ergibt sich eine rechtwinklig zu dieser Tangente ausgerichtete Druckkraft, in der genannten Schnittebene betrachtet, die eine Komponente hat, die die Schneidplatte zusätzlich fest in ihre Nut hineinpreßt, und zwar mit ihrer Rückenfläche gegen die Rückenstützfläche anpreßt und mit ihrer Schrägfläche gegen die Schrägfläche der Nut anpreßt. Auf diese Weise ist mit einfachen geometrischen Mitteln erreicht, daß beim Festziehen der Spannschraube gleichzeitig bei allen Schneidplatten solche Druckkräfte wirksam sind, die alle Schneidplatten gleichmäßig in ihrem Sitz festpressen und fixieren. Die auftretenden Schnittkräfte drücken die einzelnen Schneidplatten zusätzlich in ihren Sitz.

Vorteilhaft kann ferner die Ausgestaltung nach Anspruch 21 sein. Dadurch ist erreicht, daß die einzelnen Nuten durchgehend eingefräst werden können und sodann mittels des Ringes am äußeren Ende geschlossen werden, wobei der Ring dann die Stützfläche am Nutende bildet.

Weitere Einzelheiten und Vorteile ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummer darauf Bezug genommen, wodurch jedoch alle diese Anspruchsmerkmale als an dieser Stelle ausdrücklich und erfindungswesentlich offenbart zu gelten haben.

Auch wenn vorstehend und in den Ansprüchen von Schneidplatten die Rede ist, versteht es sich jedoch, daß in gleicher Weise auch Abstützleisten ausgebildet und gehalten sein können, wenn solche beim Kegelsenker vorhanden sind.

0175053

Die Erfindung ist nachfolgend anhand eines in den Zeichnungen gezeigten Ausführungsbeispieles näher erläutert. Es zeigen:

Fig. 1 — eine schematische, teilweise geschnittene Seitenansicht eines Teiles eines Kegelsenkers,

Fig. 2 — eine schematische Draufsicht des Kegelsenkers in Fig. 1, im funktionsbereiten Zustand,

Fig. 3 — eine Draufsicht des Kegelsenkers entsprechend derjenigen in Fig. 2, jedoch bei entfernter Spannschraube,

Fig. 4 — einen schematischen Schnitt entlang der Linie IV - IV in Fig. 1, in größerem Maßstab,

Fig. 5 — eine schematische, perspektivische Ansicht einer Schneidplatte des Kegelsenkers.

Der in den Zeichnungen gezeigte Kegelsenker weist einen im wesentlichen kegelförmigen Senkerkörper 10 mit zu dessen Mittelachse 11 koaxialem Schaft 12 auf. Der Senkerkörper 10 weist mindestens zwei, beim gezeigten Ausführungsbeispiel drei, in Umfangsrichtung in im wesentlichen gleich großen Winkelabständen voneinander angeordnete Schneidplatten 13, 14 und 15 auf, die in Sitzen des Senkerkörpers auswechselbar gehalten sind. Beim gezeigten Ausführungsbeispiel haben die Schneidplatten 13, 14, 15 einen Umfangswinkelabstand von 120° voneinander. Ihre Materialgestaltung ist beliebig. Sie bestehen z.B. aus HSS, Hartmetall od. dgl. Jede Schneidplatte 13 - 15 weist, wie nur für die Schneidplatte 14 zu sehen ist, auf ihrer Brustfläche 19 bzw. 20 bzw. 21 nahe der Schneidkante 16 bzw. 17 bzw. 18 eine Spanleitstufe 22 auf, die in Radialrichtung, ausgehend von der Mittelachse 11, und dabei in Richtung einer Kegelmantellinie gesehen, zur besseren Spanbildung nach außen hin zunehmend größer wird.

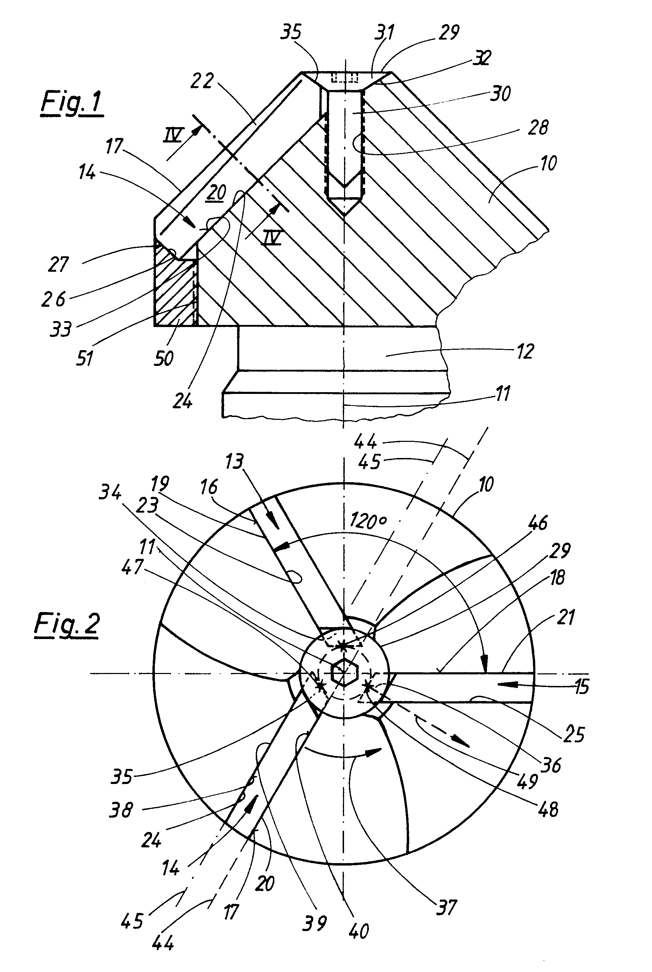

Jeder Sitz für die Schneidplatte 13, 14, 15 weist eine Nut 23 bzw. 24 bzw. 25 im Senkerkörper 10 auf. Jede Nut 23, 24, 25 verläuft im wesentlichen parallel zu einer Kegelmantellinie des Senkerkörpers 10, wobei sie etwa vom Zentrum dieses ausgeht und von dort radial nach außen führt. Die Nut 23, 24, 25 hat einen über die ganze Länge zumindest im wesentlichen gleichbleibenden Nutquerschnitt und ist von außen her eingetieft, d.h. nach außen hin offen, sowie zum Zentrum des Senkerkörpers 10 hin offen. An ihrem anderen, in Fig. 1 - 3 jeweils außen befindlichen Ende ist jede Nut 23, 24, 25 mittels einer über den Nutgrund hinaus überstehenden Stützfläche begrenzt. Eine solche ist in den Zeichnungen nur bei der einen, sichtbaren Nut 24 in Fig. 1 zu sehen und dort mit 26 bezeichnet.

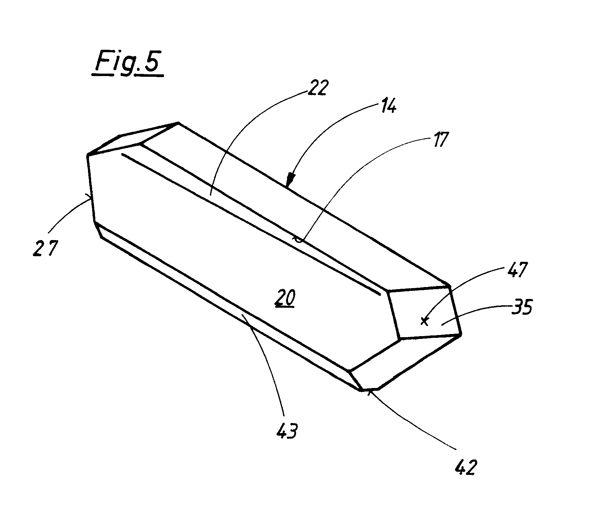

Jede Schneidplatte 13, 14, 15 ist als im Querschnitt zumindest in etwa rechteckige Leiste ausgebildet, deren längsverlaufende Außenkante die jeweilige Schneidkante 16 bzw. 17 bzw. 18 bildet und die innerhalb der zugeordneten Nut 23 bzw. 24 bzw. 25 paßgenau aufgenommen ist. Jede Schneidplatte 13, 14, 15 trägt am in Radialrichtung außen befindlichen Ende eine endseitige Anschlagfläche, die in Fig. 1 und 5 allein für die eine Schneidplatte 14 zu sehen und dort mit 27 bezeichnet ist. Mit dieser endseitigen Anschlagfläche 27 liegt die Schneidplatte 14 an der Stützfläche 26 des Senkerkörpers 10 flächig an.

0175053

Im Zentrum und dabei im Bereich des kleinen Kegelendes und der Mittelachse 11 enhält der Senkerkörper 10 eine zentrale Gewindebohrung 28. In diese ist eine Spannschraube 29 mit ihrem Gewindeschaft 30 eingeschraubt. Alle Schneidplatten 13, 14 und 15 reichen bezüglich ihrer Länge bis hin zur Spannschraube 29. Beim Festziehen der Spannschraube 29 übt diese auf alle Schneidplatten 13, 14 und 15 eine vom Zentrum ausgehende Spannkraft aus, die die Schneidplatten 13, 14, 15 in ihrer jeweiligen Nut 23 bzw. 24 bzw. 25 festspannt und dabei auch gegen die jeweilige Stützfläche anpreßt, so, wie für die Schneidplatte 14 die Anpressung mit deren Anschlagfläche 27 gegen die Stützfläche 26 in Fig. 1 gezeigt ist. Mit der Spannschraube 29, und damit mittels eines einzigen Elementes, sind sämtliche Schneidplatten 13 - 15 zugleich gespannt und in ihren jeweiligen Nuten 23 - 25 in sämtlichen Richtungen fixiert. Durch die von der Spannschraube 29 aufgebrachte Spannkraft wird ein gleichmäßiger Andruck auf alle miteinander wirkenden Anlageflächen erzeugt, wobei auch Toleranzen bezüglich der einzelnen Anlageflächen sowohl der Schneidplatten 13 - 15 als auch der Sitze über die Spannschraube 29 ausgeglichen werden, da bekanntlich das Gewinde nicht zentriert, sondern einen solchen Ausgleich noch möglich macht. Das Gewindespiel nimmt also Unterschiede auch bezüglich der Länge der einzelnen Schneidplatten 13, 14 und 15 auf. Sonstige Halte- oder Klemmvorrichtungen für die Schneidplatten 13 - 15 sind somit entbehrlich.

Die Spannschraube 29 weist einen verdickten Kopf 31 auf, der hier als Kegelkopf gestaltet ist. Die äußere Umfangsfläche des Kopfes 31 bildet eine Druckfläche 32, mit der der Kopf 31 gegen alle Schneidplatten 13 - 15 drückt. Der Kegelwinkel des kegelförmigen Kopfes 31 liegt im Bereich zwischen 70° und 140°. Vorzugsweise beträgt er, wie beim Ausführungsbeispiel, 120°.

Wie insbesondere Fig. 1 zeigt, verläuft die Druckfläche 32 nicht parallel zur Stützfläche 26, sondern hat zur Schneidkante 17 einen Winkel von zweckmäßigerweise größer 90°.

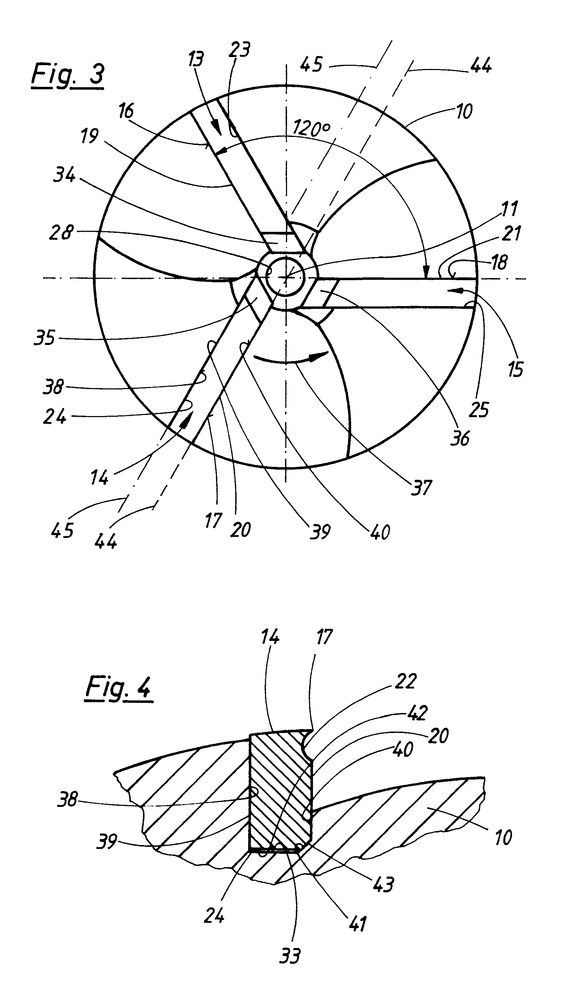

Jede Schneidplatte 13 - 15 trägt an dem Ende, daß zur Spannschraube 29 hinweist, eine besondere Spannfläche 34 bzw. 35 bzw. 36, an der die Spannschraube 29 mit ihrer Druckfläche 32 anliegt. Die Spannflächen 34, 35, 36 sind insbesondere in Fig. 3 gut zu sehen, wo die Spannschraube 29 entfernt ist. In Fig. 2, bei eingeschraubter Spannschraube 29, befinden sich diese Spannflächen 34, 35, 36, bei der Darstellung gesehen, unterhalb des Kopfes 31, weswegen sie nur gestrichelt angedeutet sind.

Wie vor allem aus Fig. 1 und 5 für die Schneidplatte 14 ersichtlich ist, für alle anderen aber gleichermaßen gilt, verläuft die endseitige Anschlagfläche 27 im Bereich etwa unterhalb und die am anderen Ende befindliche Spannfläche 35 im Bereich etwa oberhalb einer zur Schneidkante 17 etwa parallel verlaufenden, gedachten Mittellinie, die etwa auf halber Höhe der Brustfläche 20 der Schneidplatte 14 verläuft. So ergibt sich eine, in dieser Ebene der Brustfläche 20 gesehen, etwa diagonal von der Spannfläche 35 zur Stützfläche 26 gerichtete Spannkraft, erzeugt von der Spannschraube 29, wobei diese Spannkraft wegen dieser schrägen, zur Schneidkante 17 nicht parallelen Ausrichtung auch eine Komponente in Richtung zum Nutgrund 33 und natürlich eine weitere Komponente rechtwinklig zur Stützfläche 26 hat. Dies sorgt für eine zuverlässige Fixierung der Schneidplatte 14 in ihrem Sitz.

Der Winkelverlauf jeder Spannfläche 34, 35, 36 ist zumindest im wesentlichen dem Verlauf der Druckfläche 32 des Kopfes 31 der Spannschraube 29 angepaßt. Die Spannfläche 34, 35, 36 kann dabei jeweils parallel zur am Ende der Nut 23 bzw. 24 bzw. 25 befindlichen Stützfläche verlaufen. Ein derartiger etwaiger Parallelverlauf ist aus Fig. 1 ersichtlich, wo die Spannfläche 35 zumindest im wesentlichen parallel zur Stützfläche 26 ausgerichtet ist. Fig.1 und 5 zeigt ferner, daß die Spannfläche 35 zur Schneidkante 17 unter einem stumpfen Winkel von 90° oder größer verläuft. Auch bei den anderen Schneidplatten 13 und 15 sind die Verhältnisse ebenso.

Weitere Einzelheiten der Ausbildung der Nuten sind nachfolgend am Beispiel der Nut 24 und insbesondere anhand Fig. 4 erläutert. Jede Nut 24 ist im Querschnitt U-förmig und dabei mit ungleich hohen Nutflanken ausgebildet. Die in Arbeitsrichtung des Senkers, die mit Pfeil 37 angedeutet ist, hintere Nutflanke ist als Rückenstützfläche 38 ausgebildet, an der die zugeordnete Schneidplatte 14 mit ihrer Rückenfläche 39 zumindest im wesentlichen über ihre ganze Länge und Breite anliegt und abgestützt ist.

Die andere Nutflanke der Nut 24 endet in geringerem Abstand über dem Nutgrund 33 und bildet eine Bruststützfläche 40, an der die zugeordnete Schneidplatte 14 mit ihrem in Abstand von der Schneidkante 17 sich erstreckenden Teil der Brustfläche 20 zumindest im wesentlichen anliegt. In der Nut 24 geht deren Bruststützfläche 40 über eine Schrägfläche 41 in den Nutgrund 33 über. Ähnlich ist auch jede Schneidplatte, gemäß Fig. 4 die Schneidplatte 14, ausgebildet. Die Schneidplatte 14 weist im Eckbereich zwischen der Brustfläche 20 und der dem Nutgrund 33 zugewandten Fußfläche 42 ebenfalls eine sich über die ganze Leistenlänge erstreckende Schrägfläche 43 auf. Die Schrägfläche 43 hat den gleichen Schrägungswinkel wie die Schrägfläche 41 der Nut 24, ist jedoch zumindest etwas schmaler als die nutseitige Schrägfläche 41 gestaltet, so daß bei eingesetzter Schneidplatte 14 deren Fußfläche 42 noch mit Abstand oberhalb des Nutgrundes 33 verläuft und in Richtung rechtwinklig zum Nutgrund 33 noch eine Einpressung in die Nut 24 möglich ist.

Eine weitere, ebenfalls für die Erfindung wesentliche Gestaltung sieht man vor allem aus Fig. 2, 3 und 5. Die Nuten 23, 24, 25 und damit auch die Schneidplatten 13, 14 und 15 verlaufen nicht etwa innerhalb einer auch die Mittelachse 11 enthaltenden Diametralebene des Senkerkörpers 10. Vielmehr sind die Nuten 23 - 25 und damit die Schneidplatten 13 - 15, betrachtet in Arbeitsrichtung gemäß Pfeil 37 des Senkers, gegenüber der Mitte zurückgesetzt. Nur die jeweils vordere Nutflanke jeder Nut 23, 24, 25 und damit die jeweilige Schneidkante 16, 17, 18 jeder Schneidplatte 13 bzw. 14 bzw. 15 erstreckt sich zumindest im wesentlichen innerhalb einer Diametralebene, die durch die Mitte des Senkerkörpers 10, die Mittelachse 11 enthaltend, geht. Zur Verdeutlichung ist zum Sitz der Schneidplatte 14 eine derartige Diametralebene in Fig. 2 und 3 gestrichelt eingezeichnet und mit 44 bezeichnet. Die andere, jeweils hintere Flanke jeder Nut 23 - 25 erstreckt sich innerhalb einer Sekantenebene, die in Abstand von der Mitte des Senkerkörpers 10 hinter dieser Diametralebene und dabei zu dieser zumindest etwa parallel verläuft. Eine derartige Sekantenebene ist in Fig. 2 und 3 bei der einen Schneidplatte 14 schematisch strickpunktiert eingezeichnet und mit 45 bezeichnet. Dadurch ergibt sich eine solche Anlage der Spannflächen 34 - 36 an der Druckfläche 32 der Spannschraube 29, die einen Abstand von der Mitte der Spannschraube 29 und der Diametralebene 44 hat. Wie Fig. 2, 3 und 5 zeigen, ist jede Spannfläche 34, 35, 36 der Schneidplatte 13 bzw. 14 bzw. 15 auch in der Draufsicht gemäß Fig. 2 und 3 schräg ausgerichtet. Jede Spannfläche 34, 35, 36 fällt so wie die Spannfläche 35 (Fig. 5) von der Rückenfläche 39 zur vorderen Brustfläche 20 hin schräg ab. In Draufsicht gemäß Fig. 2 und 3 bedeutet dies, daß jede Spannfläche 34, 35, 36 mit der Rückenfläche einen spitzen Winkel bildet, dagegen mit der Brustfläche einen stumpfen Winkel, d.h. einen Winkel größer 90°. Diese Schrägung der Spannflächen 34, 35, 36 ist derjenigen, die sich im diametralen Längsschnitt gemäß Fig. 1 ergibt, überlagert. Die Schrägung der Spannfläche 34, 35, 36 ist so gewählt, daß - im Querschnitt gemäß Fig. 2 und 3 betrachtet - jede Spannfläche 34, 35, 36 im Kontaktbereich der Druckfläche 32 des Kopfes 31 der Spannschraube 29 zumindest im wesentlichen tangential und dabei lediglich mit Punktberührung zu dieser Druckfläche 32 verläuft. Dies ist in Fig. 2 gestrichelt angedeutet, wobei die Punktberührung in den Punkten 46 bzw. 47 bzw. 48 erfolgt. Es versteht sich, daß dieser Punkt 46, 47, 48 beim Festziehen der Spannschraube 29 auf der Spannfläche 34, 35, 36 nach unten hin wandert. Aufgrund des Tangentialverlaufes der Spannfläche 34, 35, 36 im jeweiligen Punkt 46 bzw. 47 bzw. 48 zur Druckfläche 32 wird beim Anziehen der Spannschraube 29 dort eine Spannkraft erzeugt, die - wie in Fig. 2 mit gestricheltem Pfeil 49 markiert ist - in Hauptrichtung rechtwinklig zu dieser Tangente verläuft. Diese Druckkraft in Richtung Pfeil 49 hat eine Komponente, die parallel zur jeweiligen Schneidkante 16 - 18 verläuft, sowie eine Komponente, die dazu etwa rechtwinklig und in Richtung zur hinteren, höheren Nutflanke verläuft, jeweils innerhalb der Zeichenebene gemäß Fig. 2 betrachtet. Aufgrund der Schräganordnung, bedingt durch die Anpassung an die Kegelform, sind diese Komponenten innerhalb einer Schrägebene wirksam, die etwa einer Diagonalen folgt, die in Fig. 1 ausgehend von der Spannfläche 35 zur Stützfläche 26 eingezeichnet werden könnte. Die Spannkraftkomponente, die parallel zur jeweiligen Schneidkante 16 - 18 verläuft, unterstützt

die Spannwirkung, die-in Fig. 1 betrachtet-ausgehend von der Spannfläche 35 bis hin zur Stützfläche 26 wirksam ist, d.h. die Spannwirkung, die die Längsspannung jeder einzelnen Schneidplatte 13 - 15 bewirkt und sicherstellt, daß jede Schneidplatte 13 - 15 über die Druckfläche 32 mit ihrer endseitigen Anschlagfläche 27 fest und sicher gegen die Stützfläche 26 angepreßt wird.

Die - in der Zeichenebene gemäß Fig. 2 betrachtet - etwa rechtwinklig zur jeweiligen Schneidkante 16 - 18 gerichtete Spannkraftkomponente bewirkt, daß jede Schneidplatte, wie die Schneidplatte 14, mit ihrer Rückenfläche 39 fest gegen die Rückenstützfläche 38 angepreßt wird. Ferner bewirkt die Spannkraft auch, daß jede Schneidplatte, wie die Schneidplatte 14 in Fig. 4, in die Nut 24 etwa in Richtung rechtwinklig zum Nutgrund 33 hineingepreßt wird, wobei die beiden Schrägflächen 43 und 41 miteinander in Anlage stehen. Im Ergebnis führt dies dazu, daß sämtliche Schneidplatten 13 - 15 in sämtlichen Richtungen fest und sicher innerhalb der jeweiligen Nut 23 - 25 gespannt und fixiert sind, und zwar einerseits gesehen in etwa radialer Richtung der Diametralebene 44 zur Mitte hin sowie nach außen hin und zum anderen in Umfangsrichtung und außerdem in Richtung etwa rechtwinklig zum Grund der jeweiligen Nut 23 - 25 gesehen. Dieser zuverlässige Sitz wird mit sehr einfachen und kostengünstigen Mitteln erreicht. Im Senkerkörper 10 sind dazu lediglich die Nuten 23 - 25 nötig, die kostengünstig und doch präzis, daher mit geringem Aufwand, eingearbeitet werden können. Die Schneidplatten 13 - 15 selbst benötigen keine überaus komplizierten Anlage- oder Paßflächen. Sie stellen einfache Körper dar, die einfach und daher kostengünstig mit den jeweiligen, für das Festspannen nötigen Flächen versehen werden können. Ferner bedarf es allein der zentralen Spannschraube 29, mithin nur eines einzigen Spannelementes für sämtliche Schneidplatten 13 - 15.

Zudem ist die Spannschraube 29 einfach und kostengünstig. Der Aufwand an einzelnen Elementen sowie an Bearbeitungsgängen für die Herstellung der Sitze der Schneidplatten 13 - 15 und deren Klemmung ist also im Vergleich zu bekannten Senkern wesentlich reduziert. Von Vorteil ist außerdem, daß über die zentrale Spannschraube 29 ein gleichmäßiger Andruck aller Schneidplatten 13 - 15 auch unter Ausgleich von Toleranzunterschieden erfolgt. Damit fungiert die Spannschraube 29 zugleich noch als Ausgleichselement, was daraus resultiert, daß das Gewinde bekanntlich keine zentrierende Wirkung hat und über das Gewindespiel z.B. Längenunterschiede der Schneidplatten 13 - 15 zumindest in Grenzen aufgenommen werden können. Von Vorteil ist ferner, daß das Auswechseln der Schneidplatten 13 - 15 und Einsetzen neuer problemlos und schnell und kostengünstig bewerkstelligt werden kann. Besondere Sachkenntnis ist dazu auch nicht nötig. Man muß lediglich die Spannschraube 29 lösen, die dann freiwerdenden Schneidplatten 13 - 15 herausnehmen und an deren Stelle neue Schneidplatten in die zugeordneten Nuten 23 - 25 einsetzen und sodann die Spannschraube 29 wieder aufschrauben und festziehen. Damit ist der Wechsel bereits vollzogen. Die neu eingesetzten Schneidplatten 13 - 15 sitzen dann zuverlässig in ihrer Sollposition, in der sie in beschriebener Weise zuverlässig fixiert sind. Damit wird auch die Möglichkeit eröffnet, in ein und demselben Kegelsenker Schneidplatten verschiedener Materialien in beschriebener Weise einsetzen zu können.

Zur weiteren Vereinfachung der Herstellung weist der Senkerkörper 10 am im Durchmesser größeren Kegelende und dort, wo der Kegel in einen Zylinder übergeht, einen Ring 50 auf, der auf seiner in Fig. 1 nach oben weisenden Stirnseite eine von innen nach außen schräggerichtete oberseitige Ringfläche aufweist, die je Nut 23 - 25 den dortigen Nutabschluß bewirkt und die Stützfläche 26 bildet. Der Ring 50 ist mittels eines Gewindes 51 oder in ähnlicher Weise lösbar am Senkerkörper 10 gehalten.

-.-.-.-.-.-.-

| Patentanwalt | Mülbergerstr. 65 | Zugelassener Vertreter beim |
| Dipl.-Ing. Volkhard Kratzsch | D-7300 Esslingen | Europäischen Patentamt |
| | | European Patent Attorney |

| | Telefon Stuttgart (0711) 31 70 00 | Deutsche Bank Esslingen 210 906 |
| | cable «krapatent» esslingenneckar | Postscheckamt Stuttgart 10004-701 |

Hermann Bilz GmbH & Co.

D-7300 Esslingen

24. April 1985

Anwaltsakte 3920

## Ansprüche

1. Kegelsenker, der in Umfangsrichtung in im wesentlichen gleich großen Winkelabständen voneinander angeordnete, in Sitzen des Senkerkörpers (10) auswechselbar gehaltene Abstützleisten und/oder Schneidplatten (13, 14, 15) aufweist, die jeweils mindestens eine Schneidkante (16, 17, 18) haben, d a d u r c h   g e k e n n z e i c h n e t , daß jeder Sitz eine zumindest im wesentlichen parallel zu einer Kegelmantellinie des Senkerkörpers (10) verlaufende, etwa vom Zentrum des Senkerkörpers (10) ausgehende und etwa radial nach außen führende, von außen her eingetiefte Nut (23, 24, 25) aufweist, die zum Zentrum hin offen ist und an ihrem anderen Ende mittels einer über den Nutgrund (33) hinaus überstehenden Stützfläche (26) begrenzt ist, daß jede Abstützleiste bzw. Schneidplatte (13, 14, 15) als im Querschnitt zumindest in etwa rechteckige Leiste ausgebildet ist, deren eine längsverlaufende Außenkante die Schneidkante (16, 17, 18) bildet und die innerhalb der Nut (23, 24, 25) passgenau aufgenommen ist, wobei die Abstützleiste bzw. Schneidplatte (13, 14, 15) am in Radialrichtung außen befindlichen Ende eine endseitige Anschlagfläche (27) trägt, mit der sie an der Stützfläche (26) anliegt, und daß der Senkerkörper (10) im Zentrum eine zentrale Gewindebohrung (28) und eine darin eingeschraubte, allen Abstützleisten bzw. Schneidplatten (13, 14, 15) gemeinsame Spann-

Abstützleisten bzw. Schneidplatten (13, 14, 15) eine vom Zentrum ausgehende, diese in ihrer jeweiligen .Nut (23, 24, 25) festspannende und gegen die Stützfläche (26) anpressende Spannkraft ausübt.

2. Kegelsenker nach Anspruch 1, d a d u r c h   g e -
k e n n z e i c h n e t , daß die Spannschraube (29) einen vorzugsweise verdickten Kopf (31) aufweist, dessen äußere Umfangsfläche eine Druckfläche (32) bildet, mit der der Kopf (31) gegen alle Schneidplatten (13, 14, 15) drückt.

3. Kegelsenker nach Anspruch 1 oder 2, d a d u r c h   g e k e n n z e i c h n e t , daß die Spannschraube (29) einen Kegelkopf aufweist.

4. Kegelsenker nach Anspruch 3, d a d u r c h   g e -
k e n n z e i c h n e t , daß der Kegelwinkel des Kegelkopfes im Bereich zwischen 70° und 140° liegt, vorzugsweise 120° beträgt.

5. Kegelsenker nach einem der Ansprüche 1 - 4, d a -
d u r c h   g e k e n n z e i c h n e t , daß die über den Nutgrund (33) überstehende Stützfläche (26) zumindest im wesentlichen parallel zur Druckfläche (32) der Spannschraube (29) verläuft.

6. Kegelsenker nach einem der Ansprüche 1 - 5 , d a -
d u r c h   g e k e n n z e i c h n e t , daß die Stützfläche (26) zum Nutgrund (33) unter einem spitzen Winkel verläuft, höchstens unter einem Winkel von 90°.

7. Kegelsenker nach einem der Ansprüche 1 - 6, d a -
d u r c h   g e k e n n z e i c h n e t , daß jede Schneidplatte (13, 14, 15) an dem zur Spannschraube (29) weisenden Ende eine Spannfläche (34, 35, 36) trägt, an der die Spannschraube (29) mit ihrer Druckfläche (32) anliegt.

8. Kegelsenker nach einem der Ansprüche 1 - 7, d a -
d u r c h g e k e n n z e i c h n e t , daß die
endseitige Anschlagfläche (27) im Bereich etwa unterhalb und die Spannfläche (35) im Bereich etwa oberhalb einer zur Schneidkante (17) etwa parallelen, gedachten Mittellinie der Schneidplatte (14) verläuft.

9. Kegelsenker nach Anspruch 7 oder 8, d a d u r c h
g e k e n n z e i c h n e t , daß der Winkelverlauf
der Spannfläche (34, 35, 36) zumindest im wesentlichen
an den Verlauf der Druckfläche (32), insbesondere an
den Kegelwinkel des Kegelkopfes, der Spannschraube
(29) angepaßt ist.

10. Kegelsenker nach einem der Ansprüche 7 - 9, d a -
d u r c h g e k e n n z e i c h n e t , daß die
Spannfläche (35) zumindest im wesentlichen parallel
zur Stützfläche (26) verläuft.

11. Kegelsenker nach einem der Ansprüche 7 - 10, d a -
d u r c h g e k e n n z e i c h n e t , daß die
Spannfläche (35) zur Schneidkante (17) unter einem
stumpfen Winkel von 90° oder größer verläuft.

12. Kegelsenker nach einem der Ansprüche 1 - 11, d a -
d u r c h g e k e n n z e i c h n e t , daß jede
Nut (23, 24, 25) im Querschnitt vorzugsweise U-förmig und dabei
mit ungleich hohen Nutflanken ausgebildet ist.

13. Kegelsenker nach einem der Ansprüche 1 - 12, d a -
d u r c h g e k e n n z e i c h n e t , daß die
in Arbeitsrichtung (Pfeil 37) des Senkers gesehen
hintere Nutflanke als Rückenstützfläche (38) ausgebildet ist, an der die zugeordnete Schneidplatte (14)
mit ihrer Rückenfläche (39) zumindest im wesentlichen
über ihre ganze Länge und Breite anliegt und abgestützt ist, und daß die andere Nutflanke in geringerem Abstand vom Nutgrund (33) endet und eine Bruststützfläche (40) bildet, an der die zugeordnete Schneidplatte (14) mit ihrem in Abstand von der Schneidkante (17) sich erstreckenden Teil der Brustfläche (20) zumindest im wesentlichen anliegt.

14. Kegelsenker nach einem der Ansprüche 1 - 13, d a d u r c h   g e k e n n z e i c h n e t, daß die Bruststützfläche (40) über eine Schrägfläche (41) in den Nutgrund (33) übergeht.

15. Kegelsenker nach Anspruch 14, d a d u r c h   g e k e n n z e i c h n e t , daß jede Schneidplatte (14) im Eckbereich zwischen der Brustfläche (20) und einer dem Nutgrund (33) zugewandten Fußfläche (42) eine sich über die ganze Leistenlänge erstreckende Schrägfläche (43) aufweist.

16. Kegelsenker nach Anspruch 15, d a d u r c h   g e k e n n z e i c h n e t , daß die Schrägfläche (43) der Schneidplatte (14) den gleichen Schrägungswinkel aufweist wie die Schrägfläche (41) in der Nut (24), jedoch schmaler als diese ausgebildet ist.

17. Kegelsenker nach einem der Ansprüche 1 - 16, d a d u r c h   g e k e n n z e i c h n e t , daß die in Arbeitsrichtung (Pfeil 37) des Senkers gesehen vordere Nutflanke (40) jeder Nut (24) sich zumindest im wesentlichen innerhalb einer Diametralebene (44) erstreckt, die durch die Mitte (11) des Senkkörpers (10) geht, während die andere, hintere Nutflanke (38) sich innerhalb einer Sekantenebene (45) erstreckt, die in Abstand von der Mitte (11) des Senkkörpers (10) hinter der Diametralebene (44) und zu dieser etwa parallel verläuft.

0175053

18. Kegelsenker nach einem der Ansprüche 7 - 17, d a - d u r c h g e k e n n z e i c h n e t , daß die Spannfläche (34, 35, 36) jeder Schneidplatte (13, 14, 15) von deren Rückenfläche (39) zur Brustfläche (20) hin schräg abfällt.

19. Kegelsenker nach Anspruch 18, d a d u r c h g e - k e n n z e i c h n e t , daß die schräge Spannfläche .(34, 35, 36) jeder Schneidplatte (13, 14, 15), im horizontalen Schnitt betrachtet, im Kontaktbereich der Druckfläche (32) des Kegelkopfes der Spannschraube (29) zumindest im wesentlichen tangential zu dieser Druckfläche (32) verläuft.

20. Kegelsenker nach Anspruch 18 oder 19, d a d u r c h g e k e n n z e i c h n e t , daß die Druckfläche (32) des Kegelkopfes der Spannschraube (29), im horizontalen Schnitt betrachtet, im Kontaktbereich lediglich Punktberührung (46, 47, 48) mit der schrägen Spannfläche (34, 35, 36) jeder Schneidplatte (13, 14, 15) hat.

21. Kegelsenker nach einem der Ansprüche 1 - 20, d a - d u r c h g e k e n n z e i c h n e t , daß der Senkerkörper (10) am im Durchmesser größeren Kegelende einen Ring (50) aufweist, der die Stützfläche (26) je Nut (23, 24, 25) trägt, und vorzugsweise daß der Ring (50) mittels eines Gewindes (51) lösbar am Senkerkörper (10) gehalten ist.

- . - . - . . - . - . . - . - . -

_Fig. 1_

_Fig. 2_

120°

213                    0175053

Fig. 3

Fig. 4

*Fig.5*